# FASCICULE DE BREVET EUROPEEN

(11) **EP 1 488 724 B1**
(45) Date de publication et mention de la délivrance du brevet: **29.11.2006**
(21) Numéro de dépôt: 04291170.1
(22) Date de dépôt: 06.05.2004
(51) Int. Cl.: A47J 43/08

(54) **Machine de traitement de produits alimentaires ayant des moyens de verrouillage étant équipée d'un outil**
Küchenmaschine mit Verrriegelung und mit Werkzeug
Kitchen-machine with locking-means and with a tool

(30) Priorité: 09.05.2003 FR 0305634
(43) Date de publication de la demande: 22.12.2004
(73) Titulaire: Dito Sama, 23200 Aubusson (FR)
(72) Inventeur: Naud, Georges, 23200 Aubusson (FR); Lagier, Christophe, 23200 Aubusson (FR); Paturel, Bruno, 23200 Aubusson (FR)
(74) Mandataire: Domenego, Bertrand

(56) Documents cités:
- DE-U- 20 006 028
- US-A- 5 567 047
- US-A1- 2002 136 086

## Description

La présente invention concerne une machine de traitement de produits alimentaires, selon le préambule de la revendication 1.

Généralement, les moyens de verrouillage démontables sur le corps de machine sont constitués de moyens de vissage ou de moyens à baïonnette.

On a constaté sur les machines existantes que les moyens de vissage, qui présentent une excellente fiabilité de fonctionnement puisqu'ils évitent généralement tout démontage accidentel de l'outil au cours de son fonctionnement, ont un coût de fabrication relativement élevé, et sont difficiles à nettoyer lorsque l'outil est encrassé. Une machine d'un type similaire est connue du document US 5 567 047 A.

Les dispositifs à baïonnette sont d'un coût de fabrication plus faible, mais sont en général d'une faible précision, de sorte qu'ils sont souvent sujets au coincement, rendant leur démontage difficile. En outre, les manoeuvres de montage et de démontage demandent une attention et des efforts importants, lorsqu'ils équipent des machines de préparation alimentaire de type industriel. En particulier, les moyens de verrouillage à baïonnette de type connu dans ce domaine ne permettent pas le montage en aveugle de l'outil sur la machine, ce qui représente un inconvénient important pour des machines de relative grande taille, ces machines ne pouvant pas être facilement déplacées ou orientées par l'utilisateur pour le montage de l'outil.

L'invention a pour objet de proposer une machine avec un outil du type précité, qui offre une grande facilité de montage sur la machine associée, une grande fiabilité au sens où les risques de démontage accidentels sont minimisés, et dans lequel les moyens de verrouillage ne représentent pas un coût de fabrication élevé.

Suivant l'invention, il est donc proposé une machine selon les caractéristiques de la revendication 1.

Un mode particulier de réalisation de l'invention va maintenant être décrit plus en détail en référence aux dessins annexés, sur lesquels :
- la Figure 1 est une vue partielle en coupe d'une machine conforme à l'invention, dans un plan longitudinal axial, l'outil étant en position d'assemblage complet sur le corps de machine ;
- la Figure 2 est une vue analogue, dans le plan référé par la ligne 2-2 sur la Figure 1 ;
- la Figure 3 est une vue en perspective de l'embout de fixation de l'outil sur le corps de machine, et du bloc élastomère ;
- la Figure 4 est une vue en perspective des moyens de blocage de l'organe de centrage et de guidage ;
- la Figure 5 est une vue en plan de la face ondulée du bloc élastomère ;
- la Figure 6 est une vue partielle en perspective de l'organe de centrage et de guidage ; et
- la Figure 7 est une vue analogue à la Figure 1, en position de fixation incomplète de l'organe de centrage et de guidage dans le tube-enveloppe, et en position démontée du tube-enveloppe par rapport au corps de machine.

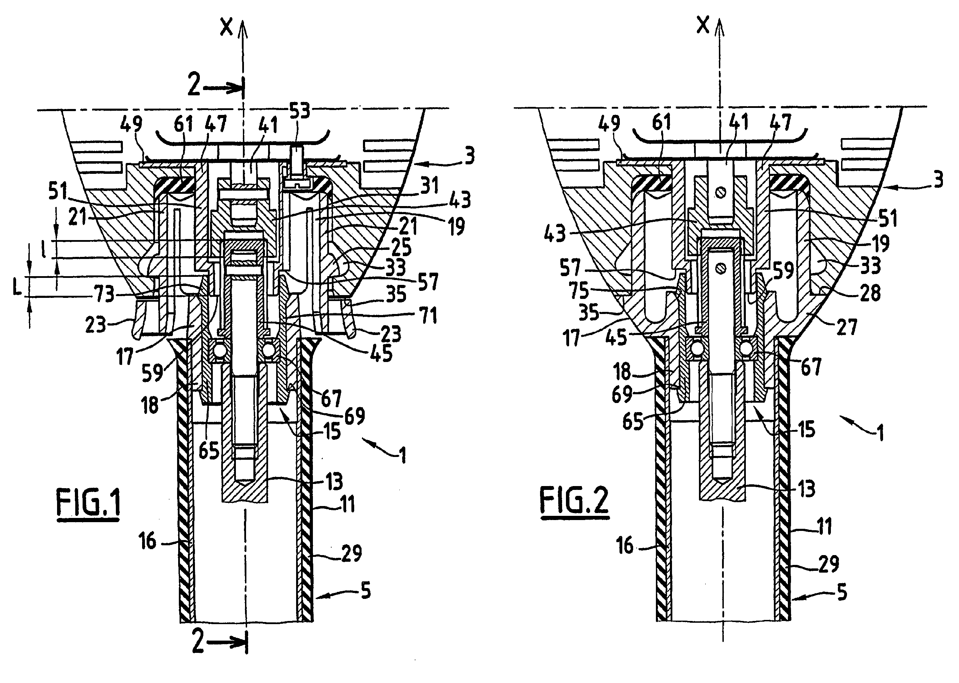

Sur les Figures 1 et 2, on a représenté une machine 1 conforme à l'invention, du type communément appelé « mixeur », cette machine comprenant un corps 3 dans lequel est agencé un moteur électrique (non représenté), et un outil 5 de traitement de produits alimentaires.

L'outil 5 comporte un organe de traitement de produits, tel qu'une lame ou couteau pouvant être entraînée en rotation par le moteur de la machine, suivant un axe de rotation X qui définit l'axe de machine 1.

La machine représentée sur les Figures pour illustrer l'invention est généralement utilisée avec son axe X maintenu verticalement, l'outil 5 plongeant dans un récipient contenant les produits alimentaires à traiter. C'est pourquoi, pour la commodité de la description qui va suivre, l'axe X de la machine 1 sera supposé vertical, orienté de bas en haut par rapport à la position d'utilisation normale de la machine.

L'outil 5 comprend essentiellement un tube-enveloppe 11 de forme générale essentiellement cylindrique, et un arbre 13 d'entraînement en rotation de l'organe de traitement des aliments. L'organe de traitement fixé à l'arbre d'entraînement 13 dans une partie d'extrémité inférieure de ce dernier, n'a pas été représenté. Il est généralement protégé par une cloche appartenant à l'outil, solidaire du tube-enveloppe, cette cloche n'étant également pas représentée.

L'arbre d'entraînement 13 est monté rotatif de façon coaxiale et démontable à l'intérieur du tube-enveloppe 11. Pour cela, l'outil 5 est muni de moyens de centrage et de guidage de l'arbre d'entraînement 13 à l'intérieur du tube 11.

Ces moyens de centrage et de guidage comprennent en particulier un palier de roulement 15 monté sur l'arbre d'entraînement 13 dans une région d'extrémité supérieure de ce dernier. Le palier 15, comme cela sera vu ultérieurement, est pourvu de moyens de fixation démontables à l'intérieur du tube 11, coopérant avec des moyens complémentaires prévus du côté de l'extrémité supérieure du tube 11. Le palier 15 assure, au niveau des extrémités supérieures respectives du tube 11 et de l'arbre 13, une liaison pivot avec arrêt axial de l'arbre 13 sur le tube 11, cette liaison étant détachable.

Les moyens de centrage et de guidage peuvent également comprendre un deuxième palier de roulement (non représenté) solidaire de l'arbre 13 dans une région d'extrémité inférieure, ledit palier pouvant venir en arrêt axial sur un épaulement interne du tube 11.

Le tube-enveloppe 11 comprend un tube principal 16 réalisé de préférence en métal, qui s'étend sur l'essentiel de la longueur du tube-enveloppe, et un embout 17 fixé de façon indémontable à l'extrémité supérieure du tube principal 16, qui assure la fixation démontable du tube-enveloppe 11 sur le corps de machine 3.

On pourra à présent se référer aux Figures 1 à 3 pour la description détaillée de l'embout 17.

Cet embout 17, réalisé de préférence en matière plastique, est essentiellement constitué d'un premier tronçon cylindrique 18 et d'un deuxième tronçon cylindrique 19 de plus grand diamètre. L'embout 17 est emmanché coaxialement sur le tube principal 16 par emboîtement du premier tronçon cylindrique 18, dont le diamètre extérieur est ajusté au diamètre intérieur du tube principal 16.

Le deuxième tronçon cylindrique 19 fait saillie axialement et radialement du tube principal 16. Ce tronçon 19 porte des moyens de fixation démontables du tube-enveloppe 11 sur le corps de machine 3, sous la forme d'une paire de bras élastiques 21, s'étendant axialement et de façon symétrique l'un vis-à-vis de l'autre, par rapport à un plan axial. Chaque bras 21 se découpe dans la paroi périphérique du deuxième tronçon 19, en étant attaché à cette dernière par son extrémité supérieure, laquelle définit une charnière de flexion du bras 21. L'extrémité inférieure du bras 21 est libre et supporte un bouton de manoeuvre 23 en saillie radiale. Dans une région intermédiaire, chaque bras 21 est pourvu d'un plot 25 en saillie radiale formant crochet de verrouillage.

Sur son bord périphérique d'extrémité libre, le tronçon 19 présente des ondulations, générées par une sinusoïde qui s'étend de façon périphérique, ces ondulations définissant une alternance de saillies 26 et de creux axiaux.

L'embout 17 présente également une collerette tronconique 27 dans une région de transition entre les tronçons cylindriques 18, 19, dont la base 28 de plus grand diamètre s'étend de façon périphérique à la base du deuxième tronçon 19, en définissant un épaulement annulaire prévu pour limiter l'engagement axial du tube-enveloppe 11 dans le corps de machine 3.

La liaison rigide indémontable entre le tube principal 16 et l'embout 17 est sécurisée par un manchon 29 de forme générale cylindrique, s'étendant à partir de la collerette 27 autour du tube principal 16 sur une partie de sa longueur. Le manchon 29, de préférence réalisé en matière plastique, peut définir une poignée de préhension de l'outil 5. Il peut être formé, par exemple, par surmoulage de matière plastique sur le tube principal 16 et l'embout 17 préalablement assemblés.

En se référant à nouveau aux Figures 1 et 2, on va à présent décrire plus particulièrement la partie du corps de machine 3, dans laquelle est reçu l'outil 5.

Le corps 3 présente un alésage axial 31 débouchant du côté inférieur du corps de machine 3. Cet alésage 31 est de forme générale sensiblement cylindrique, adaptée pour recevoir à engagement axial le premier tronçon 19 de l'embout 17. Débouchant dans l'alésage 31, est prévue une gorge annulaire 33 qui définit un cran d'arrêt complémentaire des crochets 25. Le corps de machine 3 a également une face inférieure sur laquelle débouche l'alésage 31, cette face étant pourvue d'un rebord annulaire 35 formant butée pour l'épaulement 28 de l'outil.

L'arbre-moteur 41 de la machine fait saillie axialement à l'intérieur de l'alésage 31 depuis le fond de ce dernier. L'arbre-moteur 41 est muni à son extrémité libre d'une forme d'entraînement 43, liée en rotation, et qui peut être accouplée de façon débrayable avec une forme d'entraînement complémentaire 45 prévue en extrémité supérieure de l'arbre d'entraînement 13 de l'outil. L'accouplement débrayable des deux formes d'entraînement 43, 45 peut par exemple être réalisé par des nervures et gorges axiales complémentaires.

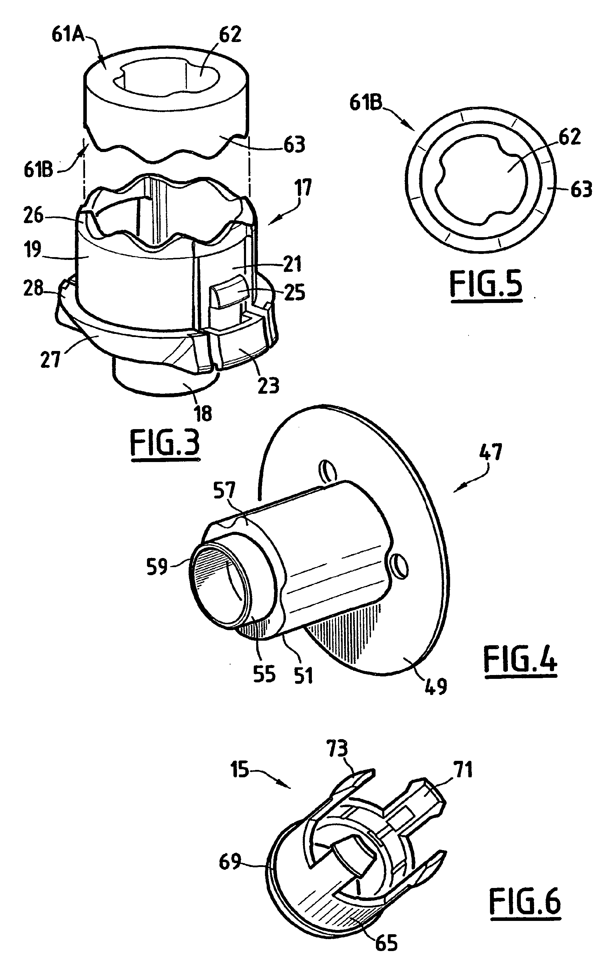

Le corps de machine 3 est solidaire d'un organe de blocage et de détection 47, représenté seul sur la Figure 4.

Cet organe de blocage et de détection 47 est constitué essentiellement d'un plateau 49 de fixation au corps 3, et d'une douille centrale 51 essentiellement cylindrique, d'axe orthogonal au plateau. Le plateau 49 est fixé rigidement au corps 3 en fond d'alésage 31 au moyen de vis 53. Le plateau 49 est de forme annulaire avec un alésage central au travers duquel s'étend l'arbre-moteur 41. La douille 51 fait saillie à l'intérieur de l'alésage 31 en entourant complètement la forme d'entraînement 43. A l'extrémité inférieure de la douille est formée une paroi cylindrique coaxiale 55 de plus faible diamètre, définissant à sa base un épaulement sensiblement annulaire 57, et à son extrémité libre un bord de butée 59.

Dans l'exemple représenté, le fond de l'alésage 31, autour de la douille 51, est recouvert d'un bloc élastomère 61 solidaire du corps 3.

En référence à présent aux Figures 3 et 5, on va décrire plus précisément le bloc ou tapis élastomère 61. Ce dernier a une forme extérieure générale cylindrique, complémentaire de la paroi intérieure axiale de l'alésage 31. Il est formé avec un alésage central axial 62, complémentaire de la douille 51, et adapté pour être bloqué en rotation sur cette dernière. Dans l'exemple représenté, le bloc élastomère 61 est bloqué en rotation sur l'organe 47 au moyen de l'engagement mutuel de saillies et d'encoches radiales formées respectivement dans l'alésage 62 et sur la douille 51.

Une première face 61A de base du bloc élastomère 61 est sensiblement plane, de façon à assurer un appui plan sur le fond de l'alésage 31, tandis que l'autre face 61B de base du bloc 61, qui coopère avec le tronçon d'embout 19, présente une ondulation sinusoïdale 63 correspondant à l'ondulation 26 du tronçon 19. L'ondulation 63 est formée sur une couronne périphérique de la face 61B, sur une largeur par exemple égale ou légèrement supérieure à l'épaisseur de paroi de la section d'embout 19.

On va à présent décrire plus en détail le palier 15 en référence aux Figures 1, 2 et 6.

Le palier 15 comporte essentiellement une bague 65 sensiblement cylindrique en matière plastique, un roulement 67 (non représenté sur la Figure 6) par exemple à billes, ménagé à l'intérieur de la bague 65, et des moyens libérables de fixation du palier 15 à l'intérieur du tube-enveloppe 11.

La bague 65 est de dimensions extérieures ajustées à la dimension interne du premier tronçon cylindrique 18 de l'embout 17, de façon que le palier puisse être inséré axialement, sans jeu radial, à l'intérieur dudit tronçon 18.

Les moyens libérables de fixation du palier 15 comprennent, à l'extrémité inférieure de la bague 65, une collerette annulaire 69 définissant, avec le bord inférieur du tronçon 18, un arrêt axial dans une première direction, et des pattes flexibles 71 venues de matière avec la bague 65, en saillie axiale vers le haut à partir de cette dernière. Chaque patte flexible présente un crochet 73 à son extrémité libre, qui fait saillie radialement vers l'extérieur. Les crochets 73 définissent, avec une surface interne tronconique 75 évasée vers le haut du tronçon 18, un arrêt axial dans la deuxième direction du palier 15 par rapport au tube-enveloppe 11.

On comprend aisément le mode d'assemblage de l'arbre d'entraînement 13 à l'intérieur du tube enveloppe 11 par l'intermédiaire du palier 15 : le palier 15 étant solidaire de l'arbre d'entraînement 13, et l'embout 17 étant fixé rigidement sur le tube principal 16, on insère l'arbre d'entraînement 13 et son palier 15 à l'intérieur du tube-enveloppe 11, et on les fait coulisser vers le haut jusqu'à ce que les pattes flexibles 71 entrent en contact avec le bord inférieur du tronçon 18. En poursuivant le mouvement d'insertion, les pattes 71 fléchissent élastiquement vers l'axe X, et sont rappelées élastiquement vers leur position de repos lorsque les crochets 73 parviennent dans la section d'extrémité évasée du tronçon 18. La collerette 69 vient alors en butée sur le bord inférieur du tronçon 18, et le palier 15 est ainsi arrêté par rapport au tube-enveloppe 11, dans sa position axiale de fonctionnement normal.

Comme cela sera expliqué ultérieurement, le montage de l'arbre d'entraînement 13 et du palier 15 à l'intérieur du tube enveloppe 11 doit être effectué avant la fixation de l'outil 5 sur le corps de machine 3.

Une fois que l'outil a été ainsi assemblé, l'utilisateur peut monter l'outil 5 sur le corps de machine 3.

Pour cela, il insère axialement l'embout 17 à l'intérieur de l'alésage 31. A l'entrée de l'embout 17 dans l'alésage 31, les crochets 25 viennent au contact du rebord extérieur 35, ce qui provoque le fléchissement vers l'axe X des bras 21. Lorsque l'on poursuit l'insertion de l'embout 17 dans l'alésage 31, l'extrémité supérieure de l'embout 17 vient en appui sur le tapis élastomère 61, avec complémentarité de forme des ondulations 26 et 63, et le comprime légèrement, tandis que les crochets 25 tombent dans la gorge annulaire 33, ce qui provoque le retour élastique des bras 21 dans leur position de repos. Si l'on poursuit l'insertion, l'épaulement annulaire 28 de la collerette 27 vient en butée sur le rebord 35 du corps de machine 3. Sous l'effet de la réaction élastique du bloc élastomère 61 sur l'embout 17, les crochets 25 sont plaqués dans la gorge 33 dans leur position de butée. L'outil 5 est ainsi immobilisé axialement par rapport au corps 3.

Le bloc élastomère 61 assure plus généralement des fonctions de compensation de jeu axial, d'amortissement de vibrations, et d'isolation électrique notamment par rapport aux vis 53.

Il assure en outre une fonction d'étanchéité et a une forme prévue pour faciliter son nettoyage. Ainsi, il contribue à l'amélioration de l'hygiène de la machine.

Grâce aux ondulations complémentaires 26, 63 respectivement de la section d'embout 19 et du bloc 61, ce dernier assure également, par friction et par rappel élastique, un effet d'anti-rotation de l'outil 5 par rapport au corps de machine 3.

A titre d'exemple, le bloc élastomère 61 pourra être moulé dans une matière telle que du polyuréthane.

Au terme de l'opération de montage de l'outil 5 dans le corps de machine 3 qui vient d'être décrite, on parvient à la configuration assemblée représentée sur les Figures 1 et 2.

Comme cela apparaît sur ces Figures, dans cette configuration, les formes d'entraînement 43, 45 respectives de l'arbre-moteur 41 et de l'arbre d'entraînement 13, sont accouplées sur une longueur 1 dite « longueur d'entraînement ».

On constate également que les pattes flexibles 71 du palier 15 sont engagées sur la paroi cylindrique d'extrémité 55 de l'organe de blocage 47 : la paroi interne d'une patte 71 recouvre, sur une longueur L dite « longueur d'interférence », la face externe de la paroi cylindrique 55, de préférence sans contact mais avec un espacement très faible. Dans l'exemple représenté, la face interne de chaque patte flexible 71, au moins au voisinage de l'extrémité libre, appartient à une surface fictive cylindrique coaxiale avec la bague 65, d'un diamètre sensiblement égal en étant supérieur, au diamètre extérieur de la paroi cylindrique 55 de l'organe de blocage 47. Il est convenu que le diamètre de la surface fictive s'entend du diamètre de cette surface fictive définie par les pattes 71 lorsqu'elles sont dans leur position de repos.

La paroi cylindrique 55 de l'organe de blocage 47 est rigide (d'une rigidité en flexion très supérieure à celle des pattes 71) et bloque, de ce fait, dans la position d'assemblage complet du palier 15 dans le tube-enveloppe 11 et de l'outil dans le corps 3, le débattement en flexion des pattes 71. L'organe 47 empêche ainsi le déverrouillage des moyens de fixation du palier sur le tube-enveloppe.

En fonctionnement de la machine, et dans cette position d'assemblage complet, l'arbre d'entraînement 13 ne risque donc pas d'être sujet à un démontage intempestif.

Dans le mode de réalisation qui vient d'être décrit :
- la longueur axiale de la paroi cylindrique 55 est supérieure à la longueur d'interférence L ;
- les pattes flexibles 71 et leurs crochets 73 sont prévus de telle sorte que leur débattement en flexion, durant l'insertion dans le tronçon 18, est d'une amplitude supérieure à l'espacement entre d'une part la surface fictive définie par la face interne des pattes 71, et d'autre part la surface extérieure de la paroi cylindrique 55 ;
- en position d'assemblage complet, l'extrémité supérieure du tronçon 18 et la surface extérieure de la paroi 55 ont une disposition relative qui bloque le passage entre elles, dans la direction axiale, de l'extrémité libre des pattes 71.

On comprend que pour démonter l'outil 5 du corps de machine 3, à partir de la position représentée sur les Figures 1 et 2 , il suffit à un utilisateur de presser sur les boutons 23 du manchon 17, de façon à extraire les crochets 25 de la gorge 33, et de dégager le tube-enveloppe 11 de l'alésage 31 par un retrait axial.

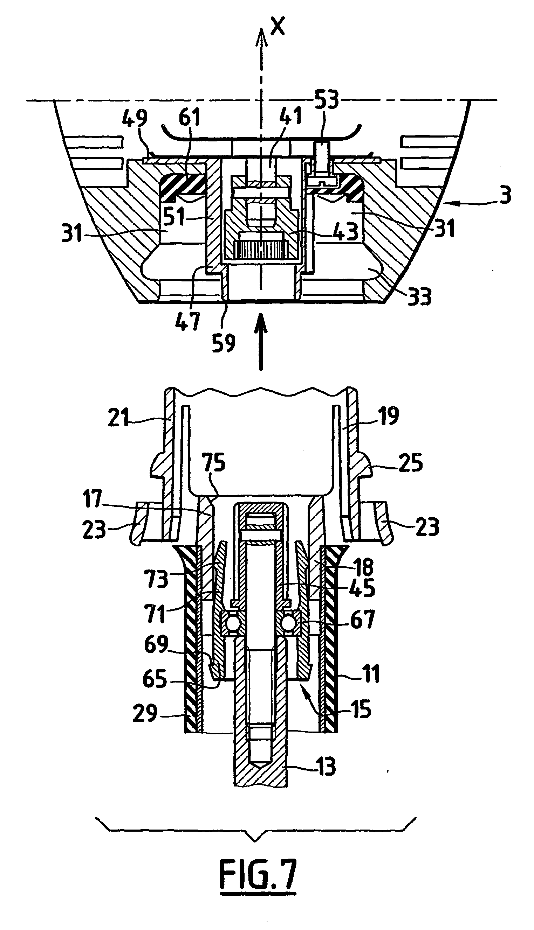

En référence à la Figure 7, on va décrire à présent une situation d'assemblage incomplet du palier 15, et solidairement de l'arbre d'entraînement 13, à l'intérieur du tube-enveloppe 11.

Dans une telle configuration, le palier 15 est par exemple introduit de façon incomplète à l'intérieur du tronçon 18 de l'embout 17, de sorte que les pattes flexibles 71 sont maintenues en position fléchie vers l'axe X. Lorsqu'un utilisateur tente de monter l'outil 5 sur le corps de machine 3, les extrémités libres des pattes 71 ne sont pas suffisamment écartées de l'axe d'insertion X pour glisser sur la surface externe de la paroi cylindrique d'extrémité 55 de l'organe de blocage 47. Ces extrémités libres viennent en butée sur le bord de butée 59 de l'organe de blocage 47. Il s'ensuit que l'utilisateur ne peut poursuivre normalement l'insertion de l'embout 17 dans l'alésage 31, et ne peut pas parvenir à la position de verrouillage des crochets 25 dans la gorge 33. S'il force pour parvenir à cette position de verrouillage de l'embout dans l'alésage, l'utilisateur provoque une extraction supplémentaire de l'arbre d'entraînement, qui est repoussé partiellement hors du tube-enveloppe 11. Cette extraction nette donne une indication visuelle à l'utilisateur de l'assemblage incorrect de l'arbre d'entraînement dans le tube-enveloppe.

Du fait que la longueur d'entraînement 1 est inférieure à la longueur d'interférence L, les formes d'entraînement 43, 45 ne sont à aucun moment en prise dans un tel cas de montage incomplet du palier 15 dans le tube-enveloppe 11.

Grâce à cette disposition, même si le moteur électrique est alimenté pour mettre en rotation l'arbre-moteur 41, le mouvement de rotation ne peut pas être transmis à l'arbre d'entraînement 13 si ce dernier n'est pas engagé de façon complète avec son palier 15 dans le tube-enveloppe 11. Cela procure une sécurité accrue pour l'utilisateur et évite une destruction des formes d'entraînement 43, 45.

On comprend également que l'organe de blocage 47 empêche le montage de l'arbre 13 et du palier 15 dans le tube-enveloppe 11 après le verrouillage du tube-enveloppe sur le corps 3. En effet, si le tube-enveloppe 11 est verrouillé sur le corps 3 en l'absence de l'arbre d'entraînement 13 et du palier 15, l'insertion du palier 15 solidairement avec l'arbre 13 à l'intérieur du tronçon 18 est arrêtée du fait que les pattes fléchies 71 viennent, par leur extrémité libre, en butée sur le bord de butée 59 de l'organe de blocage 47.

On comprend là encore que cette disposition sécurise la manipulation de l'arbre d'entraînement 13 et de son organe de coupe par l'utilisateur, dans le cas où ce dernier serait tenté de monter l'arbre dans le tube-enveloppe durant la rotation de l'arbre-moteur 41.

## Revendications

1. Machine de traitement de produits alimentaires, comportant un corps (3) et un outil (5) pouvant être fixé de façon démontable sur le corps, ledit outil (5) comprenant un tube-enveloppe (11), et un arbre (13) d'entraînement en rotation d'un organe de traitement des produits, monté dans le tube-enveloppe (11),
machine dans laquelle le corps (3) comprend un alésage axial (31), prévu pour recevoir une section de première extrémité du tube-enveloppe (11) et pourvu d'un épaulement (33),
dans laquelle le tube enveloppe (11) est muni à une première extrémité de moyens (21, 25) démontables de verrouillage sur un corps de machine (3), qui comprennent, du côté de la première extrémité, au moins un bras élastique axial (21) flexible, muni d'un crochet (25) pouvant coopérer avec l'épaulement (33) complémentaire du corps, de façon à former une liaison par encliquetage,
et dans laquelle le tube-enveloppe (11) présente, du côté de la première extrémité, une pluralité de saillies axiales (26) réparties de façon périphérique,
**caractérisée en ce qu'**elle comprend un bloc (61) en matériau élastique, interposé entre le fond de l'alésage (31) et la première extrémité du tube-enveloppe (11), lorsque ledit tube-enveloppe est verrouillé sur le corps (3), ledit bloc (61) ayant une face d'appui pour la première extrémité du tube-enveloppe, ladite face présentant des évidements axiaux (63) sensiblement complémentaires des saillies axiales (26) du tube-enveloppe (11).

2. Machine selon la revendication 1, **caractérisée en ce que** les saillies axiales (26) sont constituées par des ondulations formées sur la section de première extrémité du tube-enveloppe (11).

3. Machine suivant la revendication 2, **caractérisée en ce que** le bloc (61) est de forme générale cylindrique, l'une (61B) des faces d'extrémité présentant des ondulations axiales complémentaires de celles du tube-enveloppe (11), qui définissent lesdits évidements axiaux (63).

4. Machine suivant l'une quelconque des revendications 1 à 3, **caractérisée en ce que** le bloc (61) est prévu de façon à se déformer en compression lors de l'encliquetage des moyens de verrouillage (21, 25) sur le corps de machine (3).

5. Machine suivant l'une quelconque des revendications 1 à 4, **caractérisée en ce que** l'épaulement (33) est défini par une gorge annulaire débouchant dans l'alésage (31).

6. Machine selon l'une quelconque des revendications 1 à 5, **caractérisée en ce que** les moyens (21, 25) de verrouillage du tube-enveloppe (11) sur le corps de machine (3) comprennent une paire de bras élastiques axiaux (21) diamétralement opposés.

7. Machine selon l'une quelconque des revendications 1 à 6, **caractérisée en ce que** le tube-enveloppe (11) comprend un tube principal (16), et un embout (17) fixé de façon indémontable à une extrémité du tube principal (16), ledit embout (17) étant muni des moyens (21, 25) de verrouillage du tube-enveloppe (11) sur le corps de machine (3).

8. Machine selon la revendication 7, **caractérisée en ce que** le tube principal (16) est réalisé en métal et l'embout (17) est réalisé en matériau plastique.

## Claims

1. Machine for processing food products, comprising a body (3) and a tool (5), which can be detachably fastened to the body, said tool (5) comprising a casing tube (11) and a spindle (13) for rotatably driving a product processing element mounted in the casing tube (11),
in said machine:
the body (3) comprises an axial bore (31) provided to receive a section of the first end of the casing tube (11) and provided with a collar (33);
the casing tube (11) is provided at a first end with detachable means (21, 25) for locking onto a machine body (3), which on the side of the first end comprise at least one axial elastically flexible arm (21) fitted with a hook (25), which can cooperate with the complementary collar (33) of the body in order to form a snap connection;
and on the side of the first end the casing tube (11) has a plurality of axial projections (26) distributed around the periphery,
**characterised in that** it comprises a block (61) of elastic material interposed between the base of the bore (31) and the first end of the casing tube (11) when said casing tube is locked onto the body (3), said block (61) having a supporting face for the first end of the casing tube, said face having axial recesses (63) substantially corresponding to the axial projections (26) of the casing tube (11).

2. Machine according to Claim 1, **characterised in that** the axial projections (26) are formed by corrugations formed on the section of the first end of the casing tube (11).

3. Machine according to Claim 2, **characterised in that** the block (61) is generally cylindrical in shape, one (61B) of the end faces having axial corrugations corresponding to those of the casing tube (11), which define said axial recesses (63).

4. Machine according to any one of Claims 1 to 3, **characterised in that** the block (61) is configured so that it deforms by compressing when the locking means (21, 25) snap onto the machine body (3).

5. Machine according to any one of Claims 1 to 4, **characterised in that** the collar (33) is defined by an annular throat opening into the bore (31).

6. Machine according to any one of Claims 1 to 5, **characterised in that** the means (21, 25) for locking the casing tube (11) onto the machine body (3) comprise a pair of diametrically opposed, axial elastic arms (21).

7. Machine according to any one of Claims 1 to 6, **characterised in that** the casing tube (11) comprises a main tube (16) and a connecting piece (17) non-detachably fastened to an end of the main tube (16), said connecting piece (17) being fitted with the means (21, 25) for locking the casing tube (11) onto the machine body (3).

8. Machine according to Claim 7, **characterised in that** the main tube (16) is made of metal and the connecting piece (17) is made of plastic material.

## Patentansprüche

1. Maschine zur Verarbeitung von Lebensmitteln, mit einem Körper (3) und einem lösbar am Körper angebrachten Werkzeug (5), wobei das Werkzeug (5) ein Hüllrohr (11) und eine im Hüllrohr (11) angebrachte Drehantriebswelle (13) für eine Einrichtung zur Verarbeitung der Lebensmittel aufweist,
bei welcher Maschine der Körper (3) eine Axialbohrung (31) aufweist, die für eine Aufnahme eines ersten Endabschnitts des Hüllrohrs (11) vorgesehen und mit einer Schulter (33) versehen ist,
bei welcher Maschine das Hüllrohr (11) an einem ersten Ende mit einer abnehmbaren Verriegelungseinrichtung (21, 25) zur Verriegelung am Körper der Maschine (3) versehen ist, die auf der Seite des ersten Endes wenigstens einen flexiblen axialen elastischen Arm (21) aufweist, welcher mit einem Haken (25) versehen ist, der mit der komplementären Schulter (33) des Körpers so zusammenwirken kann, dass eine Schnappverbindung gebildet wird,
und bei welcher Maschine das Hüllrohr (11) auf der Seite des ersten Endes eine Anzahl von in Umfangsrichtung verteilten axialen Vorsprüngen (26) aufweist,
**dadurch gekennzeichnet, dass** sie einen Block (61) aus elastischem Material aufweist, zwischengelegt zwischen dem Boden der Bohrung (31), und dem ersten Ende des Hüllrohrs (11), wenn das Hüllrohr am Körper (3) verriegelt ist, wobei der Block (61) eine Anlagefläche für das erste Ende des Hüllrohres aufweist, wobei diese Fläche axiale Ausnehmungen (63) aufweist, die im Wesentlichen komplementär zu den axialen Vorsprüngen (26) des Hüllrohrs (11) sind.

2. Maschine nach Anspruch 1, **dadurch gekennzeichnet, dass** die axialen Vorsprünge (26) durch am Querschnitt des ersten Endes des Hüllrohres (11) ausgebildete Wellungen gebildet sind.

3. Maschine nach Anspruch 2, **dadurch gekennzeichnet, dass** der Block (61) allgemeine Zylinderform hat, wobei eine (61B) der Endflächen zu denjenigen des Hüllrohres (11) komplementäre axiale Wellungen aufweist, welche die axialen Ausnehmungen (63) definieren.

4. Maschine nach irgendeinem der Ansprüche 1 bis 3, **dadurch gekennzeichnet, dass** der Block (61) in einer Weise vorgesehen ist, dass er beim Einschnappen der Verriegelungseinrichtung (21, 25) am Körper der Maschine (3) zusammengedrückt wird.

5. Maschine nach irgendeinem der Ansprüche 1 bis 4, **dadurch gekennzeichnet, dass** die Schulter (33) durch eine in die Bohrung (31) mündende Ringschulter definiert ist.

6. Maschine nach irgendeinem der Ansprüche 1, bis 5, **dadurch gekennzeichnet, dass** die verriegelungseinrichtung (21, 25) zur Verriegelung des Hüllrohres (11) am Maschinenkörper (3) ein Paar von axialen elastischen Armen (21), die diametral gegenüberliegen, aufweist.

7. Maschine nach irgendeinem der Ansprüche 1 bis 6, **dadurch gekennzeichnet, dass** das Hüllrohr (11) ein Hauptrohr (16) und ein an einem Ende des Hauptrohres (16) unabnehmbar befestigtes Endstück (17) aufweist, wobei das Endstück (17) mit der Verriegelungseinrichtung (21, 25) zur Verriegelung des Hüllrohres (11) am Maschinenkörper (3) versehen ist.

8. Maschine nach Anspruch 7, **dadurch gekennzeichnet, dass** das Hauptrohr (16) aus Metall und das Endstück (17) aus Kunststoff hergestellt ist.
